# EUROPÄISCHE PATENTANMELDUNG

(11) **EP 1 068 791 A1**
(43) Veröffentlichungstag der Anmeldung: **17.01.2001**
(21) Anmeldenummer: 00112974.1
(22) Anmeldetag: 21.06.2000
(51) Int. Cl.: A01D 57/20

(54) **Selbstfahrendes Mähfahrzeug und Förderer**

(30) Priorität: 10.07.1999 DE 19932285
(71) Anmelder: DEERE & COMPANY, Moline, Illinois 61265-8098 (US)
(72) Erfinder: Franet, Roger, 57200 Sarreguemines (FR); Smith, Larry N., Ottumwa, IA 52501 (US)
(74) Vertreter: Magin, Ludwig Bernhard

(57) **Zusammenfassung**

Bekannte selbstfahrende Mähfahrzeuge mit einer mittigen und seitlichen Mäheinheiten haben das Problem, daß die Lage des mittleren Schwads durch den Radabstand festgelegt ist.

Es wird vorgeschlagen, unterhalb des Mähfahrzeugs (10) einen ersten Förderer (14) vorzusehen, der das Mähgut aufnimmt, nach hinten befördert und einem zweiten Förderer (16) übergibt, der es seitlich abführt.

Derartige Mähfahrzeuge und Förderer finden in der Landwirtschaft Anwendung.

## Beschreibung

Die Erfindung betrifft ein selbstfahrendes Mähfahrzeug mit wenigstens einer in Fahrtrichtung vorne angebrachten Mäheinheit, die Mähgut an einem Auslaß abgibt und einen Förderer zur Verwendung in einem selbstfahrenden Mähgerät.

Die DE-U-297 19 765 offenbart ein selbstfahrendes Mähfahrzeug mit einer Mäheinheit an seiner Vorderseite und zwei Mäheinheiten jeweils an einer Seite. Das von der vorderen Mäheinheit über eine Konditioniervorrichtung abgegebene Mähgut wird in einem Schwad zwischen den Rädern des Mähfahrzeugs abgelegt; die seitlichen Mäheinheiten bilden Schwade seitlich des Mähfahrzeugs.

Das der Erfindung zugrunde liegende Problem wird darin gesehen, daß die Größe des Schwads der vorderen mittleren Mäheinheit von dem Radabstand und der Bodenfreiheit im Bereich der niedersten und kürzesten Achse abhängt und seine Lage stets festgelegt ist. Eine Gruppierung mehrerer Schwade muß sich daher stets nach dem mittleren Schwad ausrichten, was auch dazu führen kann, daß ein oder mehrere Schwade mittels eines Rechens auf dem Boden bewegt werden muß. Hierin liegt die Gefahr, daß beim Rechenvorgang Steine oder Schmutz in das Mähgut eingebracht werden.

Dieses Problem wird erfindungsgemäß durch die Lehre des Patentanspruchs 1 bzw. 15 gelöst, wobei in den weiteren Patentansprüchen Merkmale aufgeführt sind, die die Lösung in vorteilhafter Weise weiterentwickeln.

Auf diese Weise wird das Mähgut mittels des ersten Förderers aufgefangen und gelangt nicht auf den Boden. Mittels des zweiten Förderers wird das Mähgut dann seitlich so gefördert, daß es mit einem weiteren Schwad zusammenfällt oder neben diesem zu liegen kommt. Die Richtung und die Wurfweite werden durch die Ausrichtung des zweiten Förderers und dessen Abwurfenergie bestimmt. Bei ausreichender Wurfenergie des ersten Förderers reicht anstatt des zweiten Förderers ein Leitelement, z. B. in der Art eines gebogenen Blechs, aus. Bei dem Fahrzeug kann es sich grundsätzlich neben einem speziell für diesen Zweck geschaffenen Fahrzeug um jede Art von in der Landwirtschaft gebräuchlichen Fahrzeugen handeln, z. B. Ackerschlepper, Feldhäcksler, Sprühfahrzeug, Mähdrescher, etc.

Wenn sich der erste Förderer bis an das Ende, normalerweise das rückwärtige, erstreckt und sich erst dort der zweite Förderer anschließt, hat dies den Vorteil, daß der zweite Förderer ungehindert von dem sonstigen Aufbau des Mähfahrzeugs und insbesondere von den rückwärtigen Rädern das Mähgut abgeben kann. Beispielsweise kann ein Förderer vorgesehen werden, der zwischen verschiedenen Endstellungen schwenken kann und somit das Mähgut links oder rechts abgibt. Wahlweise kann der zweite Förderer auch ständig hin- und herbewegt werden, um ein breites Schwad zu erzeugen, was dann Vorteile bringt, wenn das Mähgut dünnschichtig zum Trocknen ausgelegt werden soll; in einem solchen Fall ist aber auch die Verwendung einer Streuvorrichtung mit z. B. einem Streurad, das um eine vertikale Achse dreht, sinnvoll.

Mit einem in seiner Abwurfrichtung und/oder Abwurfweite verstellbar ausgebildeten zweiten Förderer oder Streuvorrichtung ist es möglich, verschiedene Schwadkonfigurationen zu verwirklichen. Beispielsweise können breite und flache oder hohe und schmale Gesamtschwade gebildet werden. Für spezielle Märkte können die Schwade auch einen Abstand zueinander einhalten. Die Veränderung der Auswurfrichtung kann durch eine Lageänderung, z. B. Schwenken des Förderers, Verwendung von Leitblechen und dergl., die Veränderung der Wurfweite durch einen anderen Wurfwinkel oder eine andere Wurfgeschwindigkeit erreicht werden.

Insbesondere bei Fahrzeugen mit einer geringen Bodenfreiheit im Bereich der Hinterachse ist eine hervorragende Lösung darin zu sehen, daß der zweite Förderer oder die Leitvorrichtung vor der Hinterachse vorgesehen ist und durch den Abstand zwischen den Rädern das Mähgut abgibt. In dieser Lösung liegt auch eine Verringerung des Bauaufwands, des Gewichts und der Kosten des ersten Förderers. Ein weiterer Vorteil ist die geschützte Lage des zweiten Förderers bzw. der Leitvorrichtung und die Möglichkeit, trotz angebautem zweiten Förderer einen Anhänger an das Mähfahrzeug anzukuppeln. Weist das Mähfahrzeug mehr als zwei Achsen auf, kann je nach den übrigen Gegebenheiten der Abstand zwischen der ersten und der zweiten oder der zwischen der zweiten und der dritten Achse gewählt werden.

Ein quer zur Fahrtrichtung beweglicher Förderer hat den Vorteil, daß er leicht in eine Wartungs- oder gar Transportstellung gebracht werden kann, daß er einen breiten Streubereich innehat und daß er in eine Stellung unterhalb des Mähfahrzeugs gebracht werden kann, in der er seitlich nicht übersteht.

Je nach der Breite und der Anzahl der verwendeten Mäheinheiten und der Aufnahmebreite z. B. einer Pick-Up eines Feldhäckslers oder einer Presse kann es erforderlich werden, ein Doppel- oder Mehrfachschwad stets links oder stets rechts oder abwechselnd links und rechts des Mähfahrzeugs zu bilden. Diese Aufgabe wird dadurch gelöst, daß der Förderer zu beiden Seiten abwerfen kann. Diese Möglichkeit ist gegeben mit einem Förderer, der in beiden Richtungen antreibbar ist oder mit einer Leitvorrichtung, die nach links oder rechts lenkt.

Ein erster Förderer mit zwei in der Förderrichtung parallel zueinander verlaufende Förderflächen liefert an seinem Ende zwei bereits getrennte Gutströme ab. Mit jeweils einem zweiten Förderer oder einem Leitelement zur seitlichen Abgabe des Mähguts pro Gutstrom ist eine störungsfreie Abgabe zu beiden Seiten möglich. Als Alternative könnte ein Trennblech knapp oberhalb der Förderfläche des ersten Förderers vorgesehen werden, das den gesamten Gutstrom in zwei Gutströme teilt. Ein solches Trennblech könnte auch in verschiedenen Stellungen montiert werden, um unterschiedlich breite Gutströme zu erzeugen.

Mittels eines in der Höhe verstellbaren ersten und/oder zweiten Förderers ist eine Anpassung an unterschiedliche Stoppelhöhen möglich, und der Förderer kann auch ganz gegen die Unterseite des Mähfahrzeugs angelegt werden, um eine Außerbetriebsstellung einzunehmen. Eine Höhenverstellung kann sowohl linear durch Hub- und Senkvorrichtungen erfolgen als auch mittels einer Schwenkvorrichtung. Je nach der Lage einer Schwenkachse kann zumindest der zweite Förderer auch in eine Transportstellung in Anlage an einer Seiten- oder Rückwand des Fahrzeugs gebracht werden.

Nachdem solche Förderer im wesentlichen nur bei der Grasernte eingesetzt werden, ist es vorteilhaft, wenn sie demontiert werden können, was dann sehr einfach, schnell und von einer Person durchgeführt werden kann, wenn Anschlußvorrichtungen vorgesehen sind, die - vorzugsweise ohne die Verwendung von Werkzeugen -, lösbar sind.

Damit sich das Mähgut nicht an der Unterseite des Mähfahrzeugs verfängt, ist eine glatte Gleitplatte vorgesehen, an der das Mähgut störungsfrei entlang gleitet.

Bei störrigem Mähgut wird ein störungsfreier Transport dennoch sichergestellt, wenn mit Abstand zu der Förderfläche des ersten und/oder zweiten Förderers ein weiterer Förderer vorgesehen ist, dessen Förderfläche an das Mähgut andrückt und sich in der gleichen Richtung bewegt wie die dazugehörende darunterliegende Förderfläche. Das Mähgut wird zu einer Matte zusammengedrückt und kann sich nirgends aufbauen und stauen.

Mittels eines optischen Sensors, z. B. in der Art einer Lichtschranke kann ermittelt werden, ob Mähgut gefördert wird oder ob es zu Unterbrechungen im Transport bzw. zu Stauungen gekommen ist. Auf diese Weise kann eine Bedienungsperson rechtzeitig über zu erwartende Störungen informiert werden.

Ein selbstfahrendes Mähfahrzeug dessen Mäheinheit das Mähgut einer Mähgutbehandlungsvorrichtung, einer sogenannten Konditioniereinheit zuführt, bewirkt eine schnellere Trocknung des Mähguts. Eine solche Mähgutbehandlungsvorrichtung mit einem Zinkenrotor oder mit Quetschwalzen kann an der Mäheinheit selbst angebracht werden, sich im Förderbereich des ersten oder zweiten Förderers befinden, oder sich an dessen Abgabeende anschließen.

Grundsätzlich kann das Mähfahrzeug ein eigens für diesen Zweck konstruiertes Fahrzeug sein. Angesichts der geringen Betriebszeit macht es aber Sinn, wenn die Mäheinheiten und die Förderer bzw. Leiteinrichtungen an ein bereits bestehendes Fahrzeug angeschlossen werden, das zum Zeitpunkt der Ernte dieses Mähguts gar nicht oder nur bedingt im Einsatz ist, wie dies bei Feldhäckslern, Mähdreschern und Ackerschleppern der Fall ist. Diese Verwendung ist insbesondere dann vorteilhaft, wenn es sich bei dem verwendeten Fahrzeug um ein gebrauchtes Fahrzeug handelt, das ansonsten z. B. wegen Verschleiß seiner beim Mähen nicht erforderlicher Komponenten gar nicht mehr eingesetzt würde, aber für die Zwecke des Mähens brauchbar ist.

Die Ausbildung der Förderer könnte grundsätzlich beliebig erfolgen und z. B. eine Schnecke in einem Trog aufweisen. Als besonders geeignet ist jedoch ein Förderer mit einer planaren Oberfläche anzusehen, der z. B. parallel zueinander angeordnete Rollen, auf deren Oberseite das Mähgut gefördert wird, einen Kratzförderer oder einen Bandförderer enthält, der mit einem Kunststoff-, Gummi- oder Metallgewebeband ausgerüstet ist, das über mehrere Rollen geführt ist, von denen wenigstens eine angetrieben ist. Diese Art eines Förderers baut relativ flach, vermeidet Bröckelverluste und gibt bei übermäßigem Gutstrom nach.

Die einfachste Möglichkeit, die Antriebsgeschwindigkeit, die Richtung und den Betrieb eines Förderers zu ändern wird in der Verwendung eines hydraulischen Antriebs gesehen, der stufenlos mit fernsteuerbaren Ventilen geregelt oder gesteuert werden kann. Ein weiterer Vorteil liegt in der einfachen Führung von Druckmittelleitungen auch in schlecht zugänglichen Bereichen.

Eine sichere Förderung des Mähguts auch unter widrigen Umständen wird durch die Verwendung von Förderelementen auf der Förderfläche erreicht. Als solche kommen Zinken, Rippen, Noppen aus Metall oder Kunststoff in Frage.

In der Zeichnung sind mehrere nachfolgend näher beschriebene Ausführungsbeispiele der Erfindung dargestellt. Es zeigt:
- Fig. 1: ein selbstfahrendes Mähfahrzeug in Draufsicht mit einer Mäheinheit und einem ersten und einem zweiten Förderer nach einer ersten Ausführungsform,
- Fig. 2: ein selbstfahrendes Mähfahrzeug in Draufsicht mit drei Mäheinheiten und einem ersten und einem zweiten Förderer nach einer zweiten Ausführungsform,
- Fig. 3: ein selbstfahrendes Mähfahrzeug in Draufsicht mit drei Mäheinheiten und einem ersten und einem zweiten Förderer nach einer dritten Ausführungsform und
- Fig. 4: einen vertikalen Schnitt durch einen ersten Förderer entlang der Linie 4-4 in Figur 3 und in der Blickrichtung der dazugehörigen Pfeile.

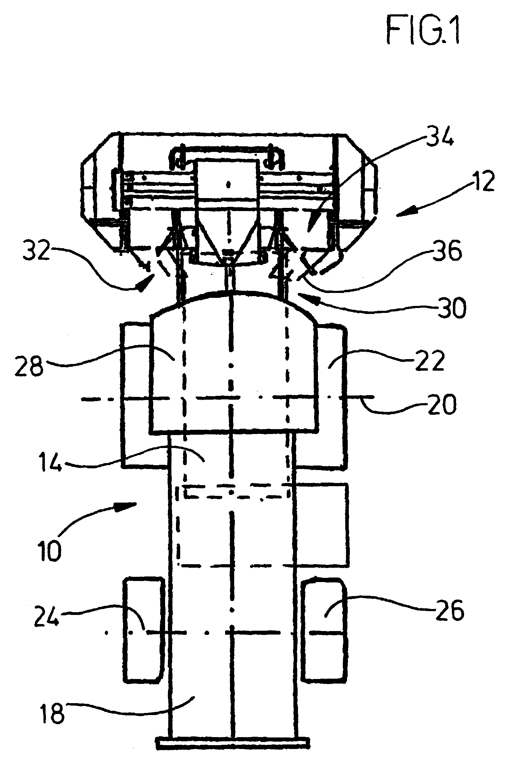

Figur 1 zeigt in schematischer Darstellung ein Mähfahrzeug 10 mit einer Mäheinheit 12, einem ersten Förderer 14 und einem zweiten Förderer 16.

Das Mähfahrzeug 10 nach diesem bevorzugten Ausführungsbeispiel ist im Grunde ein selbstfahrender Feldhäcksler ohne Häckselaggregat und ohne den sonst üblichen Vorsatz zum Aufnehmen von Mais oder Gras. Das Mähfahrzeug 10 enthält im wesentlichen ein Fahrgestell 18, das sich auf einer Achse 20 mit vorderen angetriebenen Rädern 22 und einer Achse 24 mit rückwärtigen lenkbaren Rädern 26 auf dem Boden abstützt. Auf dem Fahrgestell 18 ruht eine Fahrerkabine 28 und an seiner Vorderseite ist eine Dreipunktgerätekupplung 30 vorgesehen, die mittels einer nicht gezeigten Hubvorrichtung in der Höhe verstellbar ist. Ein üblicherweise vorgesehener Auswurfkrümmer ist zwar vorgesehen aber nicht dargestellt.

Die Mäheinheit 12 ist im wesentlichen ein herkömmlicher Scheibenmäher mit mehreren auf einem Mähbalken nebeneinander angeordneten nicht gezeigten Mähscheiben, die eine Gesamtmähbreite von bis zu fünf Metern erbringen. Die Mäheinheit 12 ist als sogenannter Frontmäher ausgebildet und weist an ihrer dem Mähfahrzeug 10 zugelegenen Seite eine Gerätekupplung 32 auf, die mit der Drei-Punkt-Gerätekupplung 30 verbindbar ist. An der dem Mähfahrzeug 10 zugelegenen, rückwärtigen Seite ist eine Gutbearbeitungsvorrichtung 22 und ein linkes und ein rechtes Schwadblech 36 vorgesehen. Die Mäheinheit 12 gibt das gemähte Gut, regelmäßg Gras, nach hinten in einem Gutstrom weiter, der in den Bereich zwischen den Rädern 22 bzw. 26 seitlich und zwischen die Unterseite des Mähfahrzeugs 12 und den Boden in der Höhe passen würde.

Die Gutbearbeitungsvorrichtung 34, die für die Benutzung der Mäheinheit nicht erforderlich, sondern nur bei bestimmten Einsatzverhältnissen vorteilhaft ist, enthält einen nicht gezeigten über Kopf arbeitenden und mit Zinken bestückten Rotor, der das Mähgut von dem Mähbalken abhebt, es bearbeitet und weiter nach hinten zu dem Mähfahrzeug 10 gibt. Die Arbeitsbreite der Mäheinheit 12 ist größer als die-Breite des Mähfahrzeugs 10 selbst. Die Schwadbleche 36 dienen dazu, den Gutstrom hinter der Gutbearbeitungsvorrichtung 34 seitlich zusammenzuführen. In dem Fall, daß keine Gutbearbeitungsvorrichtung 34 vorhanden ist, werden die Schwadbleche 36 so angeordnet bzw. ausgebildet, daß sie das Mähgut direkt von dem Mähbalken auffangen und zusammenführen. Das von der Mäheinheit 12 geschnittene Gut wird nach dem Schnitt auf den Boden abgelegt und trocknet dort bis es von einem Ladewagen, einer Presse oder einem Feldhäcksler aufgenommen und weiter bearbeitet wird.

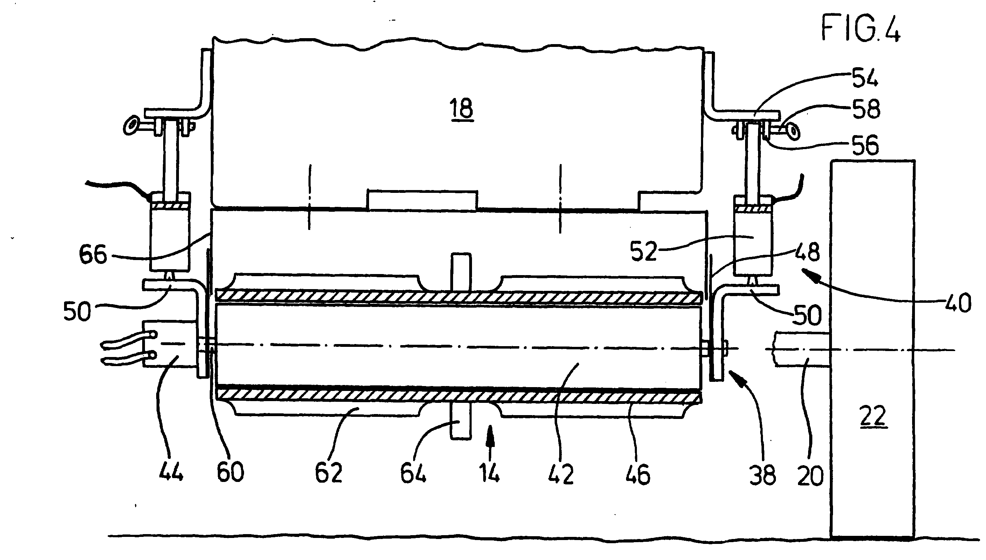

Der erste Förderer 14 ist als ein planarer Förderer der Gattung Bandförderer ausgebildet und im Querschnitt in Figur 4 im Detail zu sehen. Gemäß der schematischen Darstellung in Figur 1 erstreckt sich der erste Förderer 14 von dem Abgabebereich der Gutbearbeitungsvorrichtung 34 zwischen den vorderen Rädern 22 und unter der Achse 20 hindurch bis zum Anfang des Bereichs zwischen den vorderen und den rückwärtigen Rädern 22 und 24. Die Erstreckung in der Breite nimmt nahezu den gesamten Raum zwischen den vorderen Rädern 22 ein.

Mit Blick auf Figur 4 ist zu erkennen, daß der erste Förderer 14 einen Rahmen 38, eine Anschlußvorrichtung 40, mehrere Rollen 42, einen Motor 44 und ein Förderband 46 aufweist.

Der Rahmen 38 enthält Blechwangen 48, die über nicht gezeigte Streben miteinander verbunden sind und somit eine starre Einheit bilden. Die Blechwangen 48 erstrecken sich über die gesamte Länge des Förderers 14 und reichen höher als das Förderband 46, so daß sie das Mähgut seitlich führen und am Herabfallen hindern. An vorzugsweise vier Stellen sind an die Blechwangen 48 im besonderen oder an den Rahmen 38 im allgemeinen Halter 50 angebracht, die in diesem Ausführungsbeispiel als nach außen weisende Winkel ausgebildet sind.

Die Anschlußvorrichtung 40 weist eine Stellvorrichtung 52 und eine Aufhängung 54 auf, und zwar im Bereich jedes Halters 50. Vorzugsweise ist in jedem Eckbereich des Rahmens 38 eine Stellvorrichtung 52 und eine Aufhängung 54 vorgesehen, so daß der Rahmen 38 und damit der gesamte erste Förderer 14 in der Höhe gegenüber dem Boden verstellt werden kann.

Die Stellvorrichtung 52 ist in dem bevorzugten Ausführungsbeispiel als ein hydraulischer doppeltwirkender Stellmotor ausgebildet, dessen Länge von der Fahrerkabine 28 aus verändert werden kann. In einer einfacheren Form enthält die Stellvorrichtung 52 eine Kette, ein Seil oder dergleichen, die an der Aufhängung 54 in verschiedenen Stellungen angebracht werden kann.

Die Aufhängung 54 ist vereinfacht als Winkel dargestellt, der an dem Fahrgestell 18 angebracht und an seiner Unterseite mit einer Gabel 56 versehen ist, in der die Stellvorrichtung 52 mittels eines Bolzens 58 gesichert werden kann. Die Aufhängungen 54 entsprechen in ihrer Anzahl und Lage denen der Stellvorrichtungen 52. Nach alledem ist ersichtlich, daß der Rahmen 38 als eine komplette Einheit zwischen der Unterseite des Fahrgestells 18 und dem Boden verstellbar ist.

Die Rollen 42 sind aus Stahl oder Kunststoff gebildet und seitlich in dem Rahmen 38 drehbar gelagert. Die Rollen 42 erstrecken sich im wesentlichen über den gesamten Bereich zwischen den Blechwangen 48 und tragen somit das Förderband 46 auf seiner gesamten Breite. Wenigstens eine der endseitigen Rollen 42 ist so gelagert, daß ihr Abstand zu der gegenüberliegenden endseitigen Rolle 42 verändert werden kann, um somit die Spannung des Förderbands 46 stets auf dem erforderlichen Maß zu halten.

Der Motor 44 ist über einen Wellenstummel 60 mit einer der Rollen 42, auf der das Förderband 46 mit Spannung aufliegt, verbunden. Der hier als hydraulischer Motor 44 dargestellte Antrieb steht stellvertretend für jede andere mögliche Art eines Antriebs, also eines mechanischen mit Welle oder Zugmittel oder auch eines elektrischen. Der Motor 44 ist an den ihm zugelegenen Halter 50 angeflanscht. Die Steuerung der Drehrichtung, der Leistung und der Geschwindigkeit des Motors 44 wird von einer nicht ersichtlichen Stelle in der Fahrerkabine 28 aus vorgenommen.

Das Förderband 46 ist aus Gummi oder dergleichen mit Einlagen gebildet und entweder endlos oder an den Enden mit einem Gelenk verbunden. Das dargestellte Förderband 46 weist eine bevorzugte Weiterbildung in der Form von Förderelementen 62 auf. Diese Förderelemente 62 sind als quer zur Förderrichtung verlaufende Stege, Noppen, Rippen oder Stollen ausgebildet und treten mit dem Fördergut gewissermaßen in Formschluß.

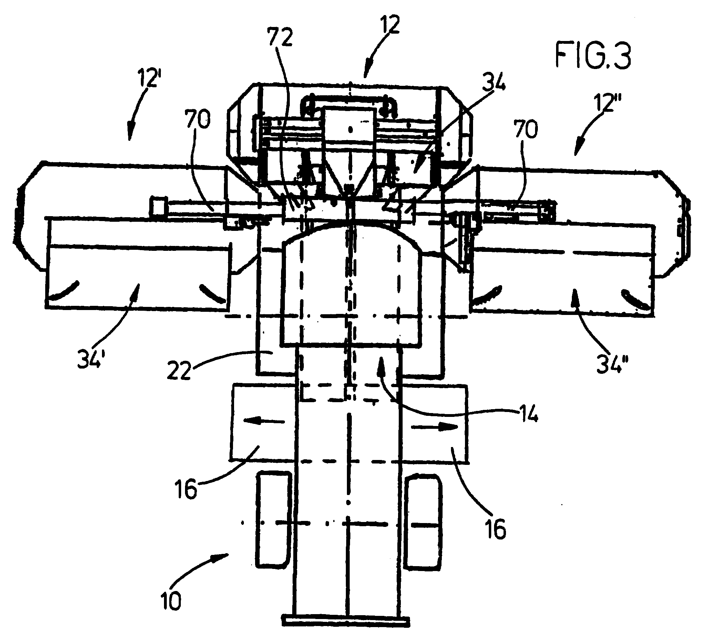

Figur 4 zeigt auf dem Förderband 46 zudem Trennelemente 64, die sich in der Förderrichtung erstrecken und ungefähr in der Mitte des Förderbandes 46 befinden. Diese Trennelemente 64 sind entweder hochkantstehende voneinander getrennte Rippen oder Finger oder sie sind als eine gewellte durchgehende Wand ausgebildet, die es zuläßt, das Förderband 46 um die Rollen 42 zu biegen. Mit Hilfe der Trennelemente 64 wird das auf der Oberfläche des Förderbandes liegende Gut in zwei Gutströme getrennt. Die Verwendung derartiger Trennelemente 64 ist für die Ausführungsform in Figur 3 gedacht.

Oberhalb des ersten Förderers 14 ist an die Unterseite des Fahrgestells 18 eine Gleitplatte 66 vorgesehen, die sich ebenfalls über die gesamte Länge des ersten Förderers 14 erstreckt und verhindert, daß sich das geförderte Mähgut an der Unterseite des Fahrgestells 18 verfängt und Stauungen verursacht. Bei dieser Gleitplatte 66 handelt es sich im wesentlichen um eine glatte Blech- oder Kunststoffplatte in der Form eines auf dem Kopf stehenden 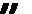 U", wobei sich die seitlichen Schenkel innerhalb des von den Blechwangen 48 begrenzten Kanals erstrecken, so daß der Förderer 14 an den Schenkeln der Gleitplatte 66 vorbei angehoben werden kann. Es ist ersichtlich, daß die Blechwangen 48, die Oberseite des Förderbandes 46 und die Gleitplatte 66 einen Kanal definieren, in dem das Mähgut reibungslos befördert werden kann. In nicht dargestellter Weise kann die Gleitplatte 66 und der Förderer 14 im Aufnahmebereich unmittelbar hinter der Gutbearbeitungsvorrichtung 34 weiter voneinander entfernt angeordnet sein, als im Übergangsbereich zu dem zweiten Förderer 16, so daß sich eine problemlose Gutannahme und Verdichtung in einem keilförmigen Bereich ergibt.

Der zweite Förderer 16 ist im wesentlichen aufgebaut wie der erste Förderer 14. Die Anordnung der beiden Förderer 14, 16 zueinander ist so gewählt, daß die Förderfläche des zweiten und somit stromabwärts gelegenen Förderers 16 allenfalls so hoch liegt wie die des ersten Förderers 14. Vorzugsweise befindet sich der zweite Förderer 16 jedoch geringfügig unterhalb des ersten Förderers 14, wie sich dies auch aus Figur 1 ergibt. Anders als bei dem Förderband 46 des ersten Förderers 14 sind auf dem Förderband 46 des zweiten Förderers 16 keine Trennelemente 64 vorgesehen, weil es dort keiner Trennung der Gutströme mehr bedarf.

Nach einer alternativen nicht dargestellten Ausführungsform ist zwischen dem Rahmen 38 des zweiten Förderers 16 und der dazugehörigen Anschlußvorrichtung 40 eine nicht näher dargestellte Gleitvorrichtung vorhanden, mit der es möglich ist, den Rahmen 38 mit dem Förderband 46 quer zur Fahrtrichtung zu verschieben; die Verschiebebewegung kann mittels eines nicht gezeigten hydraulischen Stellmotors ausgeführt werden, der einerseits an dem Rahmen 38 und andererseits an der Gleitvorrichtung angreift. Mit einer derartigen Ausführungsform ist es möglich, den zweiten Förderer 16 aus der in Figur 1 gezeigten Stellung, in der das Mähgut auf der rechten Seite des Mähfahrzeugs 10 abgegeben wird, in eine spiegelbildlich dazu gelegene Stellung zu verschieben, in der das Mähgut auf der linken Seite des Mähfahrzeugs 10 abgegeben wird. Es ist insbesondere mit Blick auf Figur 1 zu erkennen, daß der zweite Förderer 16 den Bereich zwischen den vorderen und den rückwärtigen Rädern 22 und 26 im wesentlichen einnimmt. Auf ebenfalls nicht dargestellte Weise kann ein gebogenes Leitblech im Übergangsbereich von ersten zu dem zweiten Förderer 14, 16 vorgesehen sein, das eine störungsfreie Umlenkung des Mähguts um neunzig Grad sicherstellt.

Nach alledem ergibt sich für das Ausführungsbeispiel nach Figur 1 folgende Funktion.

Das Mähgut wird mittels der Mäheinheit 12 vom Boden getrennt, in der Gutbearbeitungsvorrichtung 34 behandelt und gedrängt von den Schwadblechen 32 dem ersten Förderer 14 aufgegeben. Das Förderband 46 des ersten Förderers 14 nimmt das Erntegut unmittelbar an und führt es durch den Bereich zwischen den vorderen Rädern 22, dem Boden und gegebenenfalls der Gleitplatte 66 entlang des Mähfahrzeugs 10 und unterhalb von diesem dem zweiten Förderer 16 zu. Der zweite Förderer 16 nimmt das Mähgut auf und gibt es durch den Freiraum zwischen den vorderen und den rückwärtigen Rädern 22 und 26 seitlich des Mähfahrzeugs 10 ab.

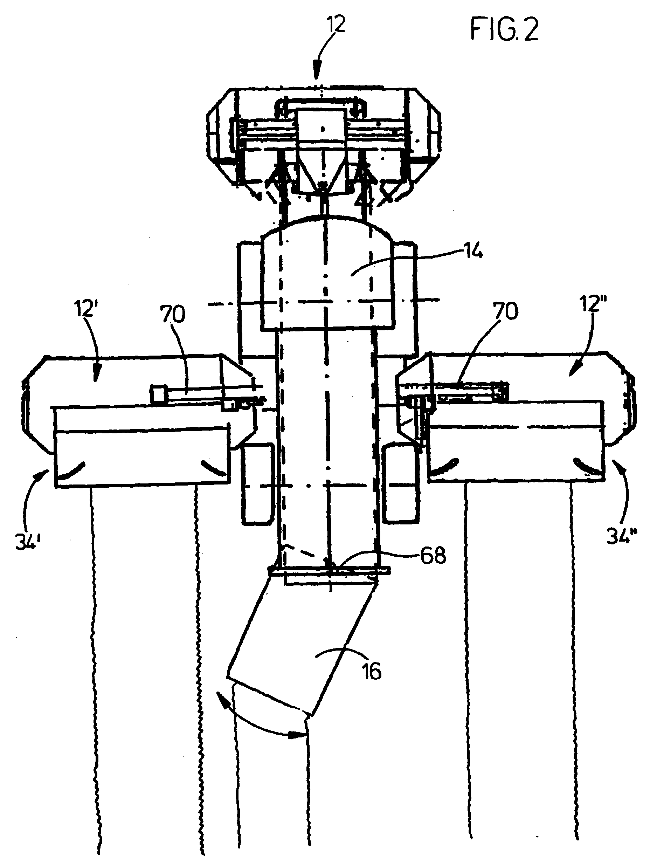

Bei dem Ausführungsbeispiel nach Figur 2 erstreckt sich der erste Förderer 14 über die gesamte Länge des Mähfahrzeugs 10 und endet somit im Bereich von dessen Rückwand. Der Aufbau des ersten Förderers 14, insbesondere mit Rahmen 38, Anschlußvorrichtung 40, Rollen 42 und Förderband 46 ist gleich mit dem in Verbindung mit der Ausführung nach Figur 1 beschriebenen - er ist lediglich länger. Der zweite Förderer 16 ist ebenfalls analog dem zweiten Förderer 16 nach Figur 1 aufgebaut - allerdings ist er nicht fest oder verschiebbar angeordnet, sondern horizontal schwenkbar. Die Schwenkbewegung erfolgt um eine vertikal oder annähernd vertikal verlaufende Schwenkachse 68 und wird mittels eines nicht dargestellten Hydraulik- oder Elektromotors gesteuert. Die Bewegung des zweiten Förderers 16 kann auf verschiedene Weise erfolgen. Nach einer Weise wird der zweite Förderer 16 nur nach links oder nur nach rechts geschwenkt, um ein Schwad seitlich des Mähfahrzeugs 10 abzulegen. Nach einer anderen Weise kann der zweite Förderer 16 ständig und relativ schnell von links nach rechts bewegt werden und somit den kompakten Gutstrom in einer dünnen Schicht hinter dem Mähfahrzeug 10 auf dem Boden ablegen - und zwar in einer Breite, die über die Breite des Mähfahrzeugs 10 hinausgeht.

Ein weiterer Unterschied zwischen den Ausführungsformen nach den Figuren 1 und 2 liegt in der Verwendung zweier weiterer Mäheinheiten 12' und 12'', die mittels vertikal schwenkbarer Arme 70 in dem Bereich zwischen den vorderen und den rückwärtigen Rädern 22 und 26 an das Fahrgestell 18 angeschlossen sind. Jede Mäheinheit 12, 12' und 12'' ist mit einer Gutbearbeitungsvorrichtung 34, 34' bzw. 34'' versehen und legt das Mähgut in einem Schwad auf dem Boden ab. Der zweite Förderer 16 ist so angeordnet, daß er das von der mittleren, vorderen Mäheinheit 12 angenommene und von dem ersten Förderer 14 herantransportierte Mähgut unmittelbar neben das Schwad der linken Mäheinheit 12' ablegt und somit ein Doppelschwad bildet, während das Schwad der rechten Mäheinheit 12'' alleine bleibt.

Wenn bei der folgenden Mähfahrt das Mähfahrzeug 10 in der entgegengesetzten Richtung entlang der von der rechten Mäheinheit 12'' Kante mäht, wird das dann von der rechten Mäheinheit 12'' gebildete einzelne Schwad neben das bereits liegende einzelne Schwad gelegt und bildet somit ebenfalls ein Doppelschwad.

Wird bei der anschließenden Mähfahrt in der gleichen Richtung gefahren, d. h. der zu mähende Abschnitt wird stets umrundet, gelangt das Schwad der Mäheinheit 12' neben das bereits liegende Schwad der Mäheinheit 12'' von der vorherigen Mähfahrt. Der zweite Förderer 16 ist nach rechts geschwenkt und legt nunmehr das Schwad der mittleren Mäheinheit 12 neben das Schwad der rechten Mäheinheit 12''. Auf diese Weise werden stets Doppelschwade gebildet, die von einer entsprechend breiten Pick-Up aufgenommen werden können.

Alternativ könnten die Schwade der Mäheinheiten 12' und 12'' auch zur Längsmittenachse des Mähfahrzeugs 10 hin abgelegt und das mittlere Schwad direkt hinter der mittleren Mäheinheit 12 abgelegt oder gestreut werden.

Der Vollständigkeit wegen wird darauf hingewiesen, daß das Ausführungsbeispiel nach Figur 2 der zusätzlichen Mäheinheiten 12' und 12'' nicht bedarf.

Figur 3 zeigt ein Mähfahrzeug 10 mit einer mittigen vorderen Mäheinheit 12 wie dies bereits in den Ausführungen nach den Figuren 1 und 2 der Fall ist. Des weiteren ist wiederum eine linke und eine rechte Mäheinheit 12' und 12'' vorgesehen, allerdings in dem Freiraum zwischen der mittleren Mäheinheit 12 und der Vorderseite des Mähfahrzeugs 10. In diesem Fall sind alle Mäheinheiten 12, 12' und 12'' an einen gemeinsamen Rahmen 72 angeschlossen, der von der Dreipunktgerätekupplung 30 getragen wird. Der Anschluß der seitlichen Mäheinheiten 12' und 12'' an dem Rahmen 72 erfolgt mittels der Arme 70. Die Mäheinheiten 12, 12' und 12'' sind jeweils mit einer Gutbearbeitungsvorrichtung 34, 34' bzw. 34'' versehen. Es gilt wiederum, daß die seitlichen Mäheinheiten 12' und 12'' für dieses Ausführungsbeispiel nicht erforderlich sondern lediglich vorteilhaft sind.

Bei der Ausführung nach Figur 3 sind ein erster Förderer 14 und zwei zweite Förderer 16 vorgesehen.

Der erste Förderer 14 erstreckt sich wiederum unterhalb des Mähfahrzeugs 10 von der mittleren Mäheinheit 12 bis hinter die rückwärtige Kante der vorderen Räder 22, wie dies bereits bei der Ausführung nach Figur 2 der Fall war. Zusätzlich ist der erste Förderer 14, dessen Aufbau und Antrieb dem bereits beschriebenen Förderer 14 entspricht, mit den bereits in Verbindung mit Figur 4 beschriebenen Trennelementen 64 versehen, die eine hälftige Aufteilung des Gutstroms in der Förderrichtung bewirken.
Die beiden zweiten Förderer 16 entsprechen im Aufbau und im Antrieb ebenfalls im wesentlichen den bereits beschriebenen Förderern 14, 16; allerdings sind sie kürzer ausgeführt und erstrecken sich nur von der Längsmittenachse des Mähfahrzeugs 10 bis in den Bereich seiner Außenkante. Auf diese Weise wird auf beiden Seiten des Mähfahrzeugs 10 die gleiche Menge an Mähgut neben ein bereits bestehendes oder noch zu bildendes Schwad abgelegt. Diese Art, Mähgut zur Seite abzugeben, hat selbst dann einen Vorteil, wenn keine seitlichen Mäheinheiten 12' und 12'' vorhanden sind, weil es dann möglich ist, das Schwad dünner und breiter abzulegen, so daß es schneller trocknet.

Die kurze Bauweise dieser zweiten Förderer 16 macht es auch möglich, sie um eine in der Fahrtrichtung verlaufende Achse in eine Außerbetriebsstellung zu schwenken.

## Patentansprüche

1. Selbstfahrendes Mähfahrzeug (10) mit wenigstens einer in Fahrtrichtung vorne angebrachten Mäheinheit (12), die Mähgut an einem Auslaß abgibt, gekennzeichnet durch einen ersten Förderer (14), der sich längs unterhalb des Mähfahrzeugs (10) über wenigstens einen Teil dessen Länge erstreckt und das Mähgut aufnimmt und durch einen zweiten Förderer (16) oder ein Leitelement zur seitlichen Abgabe des Mähguts.

2. Selbstfahrendes Mähfahrzeug nach Anspruch 1, dadurch gekennzeichnet, daß sich der erste Förderer (14) bis an das Ende des Mähfahrzeugs (10) erstreckt und der zweite Förderer (16) als eine Streuvorrichtung ausgebildet ist oder geneigt oder quer zur Fahrtrichtung verläuft.

3. Selbstfahrendes Mähfahrzeug nach Anspruch 1 oder 2, dadurch gekennzeichnet, daß der zweite Förderer (16) oder die Streuvorrichtung in der Abwurfrichtung und/oder Abwurfweite verstellbar ausgebildet ist.

4. Selbstfahrendes Mähfahrzeug nach einem oder mehreren der vorherigen Ansprüche, dadurch gekennzeichnet, daß sich der erste Förderer (14) bis zu einem Bereich zwischen zwei Achsen (20, 24) des Mähfahrzeugs (10) erstreckt und der zweite Förderer (16) in diesem Bereich angeordnet ist.

5. Selbstfahrendes Mähfahrzeug nach einem oder mehreren der vorherigen Ansprüche, dadurch gekennzeichnet, daß der zweite Förderer (16) quer zur Fahrtrichtung beweglich ist.

6. Selbstfahrendes Mähfahrzeug nach einem oder mehreren der vorherigen Ansprüche, dadurch gekennzeichnet, daß der zweite Förderer (16) derart antreibbar ist, daß er sowohl auf der einen wie auch auf der anderen Seite des Mähfahrzeugs (10) Mähgut abgeben kann.

7. Selbstfahrendes Mähfahrzeug nach einem oder mehreren der vorherigen Ansprüche, dadurch gekennzeichnet, daß der erste Förderer (14) zwei in der Förderrichtung parallel zueinander verlaufende Förderbereiche aufweist, die jeweils einem eigenen zweiten Förderer (16) oder Leitelement zur seitlichen Abgabe des Mähguts zugeordnet sind.

8. Selbstfahrendes Mähfahrzeug nach einem oder mehreren der vorherigen Ansprüche, dadurch gekennzeichnet, daß der erste und/oder der zweite Förderer (14 und/oder (16) in der Höhe verstellbar und/oder vertikal schwenkbar ist.

9. Selbstfahrendes Mähfahrzeug nach einem oder mehreren der vorherigen Ansprüche, dadurch gekennzeichnet, daß der erste und/oder der zweite Förderer (14 und/oder (16) mittels Anschlußvorrichtungen (40) an dem Mähfahrzeug (10) angebracht ist.

10. Selbstfahrendes Mähfahrzeug nach einem oder mehreren der vorherigen Ansprüche, dadurch gekennzeichnet, daß oberhalb der Förderfläche des ersten und/oder zweiten Förderers (14 und/oder (16) eine glatte Gleitplatte (66) vorgesehen ist, die zu der Förderfläche einen Abstand zur Aufnahme des Mähguts aufweist.

11. Selbstfahrendes Mähfahrzeug nach einem oder mehreren der vorherigen Ansprüche, dadurch gekennzeichnet, daß oberhalb der Förderfläche des ersten und/oder zweiten Förderers (14 und/oder (16) ein weiterer Förderer vorgesehen ist, der zu der Förderfläche einen Abstand zur Aufnahme des Mähguts aufweist.

12. Selbstfahrendes Mähfahrzeug nach einem oder mehreren der vorherigen Ansprüche, dadurch gekennzeichnet, daß wenigstens ein optischer Sensor im Förderbereich des ersten und/oder zweiten Förderers (14 und/oder (16) vorgesehen ist.

13. Selbstfahrendes Mähfahrzeug nach einem oder mehreren der vorherigen Ansprüche, dadurch gekennzeichnet, daß stromabwärts der dem ersten Förderer (14) zugeordneten Mäheinheit (12) eine Mähgutbehandlungsvorrichtung (34) vorgesehen ist.

14. Selbstfahrendes Mähfahrzeug nach einem oder mehreren der vorherigen Ansprüche, dadurch gekennzeichnet, daß es ein Feldhäcksler, Mähdrescher oder Ackerschlepper ist.

15. Förderer (14, 16) zur Verwendung in einem selbstfahrenden Mähfahrzeug nach einem oder mehreren der vorherigen Ansprüche, gekennzeichnet durch eine planare angetriebene Förderfläche, vorzugsweise in Ausbildung als Bandförderer.

16. Förderer nach Anspruch 15 gekennzeichnet durch einen hydraulischen Antrieb.

17. Förderer nach Anspruch 15 oder 16, gekennzeichnet durch Förderelemente (62) auf der Förderfläche.
